Europäisches Patentamt

European Patent Office

Office européen des brevets

(19)

(11) Veröffentlichungsnummer: **0 031 057 B1**

(12) ## EUROPÄISCHE PATENTSCHRIFT

(45) Veröffentlichungstag der Patentschrift:
**04.01.84**

(51) Int. Cl.³: **B 60 T 17/08**

(21) Anmeldenummer: **80107580.5**

(22) Anmeldetag: **04.12.80**

(54) **Federspeicherbremszylinder.**

(30) Priorität: **22.12.79 DE 2952205**

(43) Veröffentlichungstag der Anmeldung:
**01.07.81 Patentblatt 81/26**

(45) Bekanntmachung des Hinweises auf die Patenterteilung:
**04.01.84 Patentblatt 84/1**

(84) Benannte Vertragsstaaten:
**CH FR GB IT LI SE**

(56) Entgegenhaltungen:
**EP - A - 0 001 805**
**DE - A - 2 608 502**
**GB - A - 1 007 473**
**US - A - 3 255 676**

(73) Patentinhaber: **Knorr-Bremse GmbH, Moosacher Strasse 80, D-8000 München 40 (DE)**

(72) Erfinder: **Persson, Erling, Konsertvägen 7, S-24500 Staffanstorp (SE)**

ACTORUM AG

## Federspeicherbremszylinder

Die Erfindung bezieht sich auf einen Federspeicherbremszylinder gemäss dem Oberbegriff des Anspruches 1.

Federspeicherbremszylinder der vorstehend genannten Art sind durch die GB-A Nr. 1007473 und die US-A Nr. 3255676 bekanntgeworden.

Der mit einem Betriebsbremszylinder kombinierte Federspeicherbremszylinder nach der GB-A Nr. 1007473 erfordert zwei ventilgesteuerte Druckluftanschlüsse. Befindet sich der Federspeicherbremszylinder in der Bremsstellung, dann wird zum Lösen der Bremse über den einen, in Öffnungsstellung gesteuerten Anschluss (Löse-Anschluss) Druckluft in den Zylinderraum eingesteuert, während der andere Anschluss (Brems-Anschluss) in Schliesstellung gesteuert sein muss. Hierbei wird der Bremskraftkolben entgegen der Hauptdruckfeder in die Lösestellung verschoben, wenn sich in dem Zylinderraum ein Druck aufgebaut hat, der die Klemmvorrichtung zum Kuppeln des Bremskraftkolbens mit der Kolbenstange pneumatisch zum Lösen bringt. Die Kolbenstange kann dann von der Feder des entlüfteten Betriebsbremszylinders in die Lösestellung zurückgezogen werden. Zum Bremsen mit dem Federspeicherbremszylinder wird der Löse-Anschluss zugesteuert, während der Brems-Anschluss aufgesteuert wird. Hierdurch wird das Druckgleichgewicht, unter dem der mit der Kolbenstange verbundene Eilanlegehubkolben steht, einseitig gestört, wodurch er die Kolbenstange in Bremsrichtung um den Anlegehub der Bremse verschiebt. Der Bremskraftkolben wird mit der Kolbenstange gekuppelt, um die Kolbenstange mit der Kraft der Hauptdruckfeder in die volle Bremsstellung zu drücken, wenn sich der Druck in dem Zylinderraum des Federspeicherbremszylinders auf einen Wert gesenkt hat, dass die Klemmvorrichtung in die Kupplungsstellung gehen kann.

Bei diesem Stand der Technik ist der Federspeicherbremszylinder rein druckabhängig gesteuert, wozu zwei wechselseitig auf- bzw. zuzusteuernde Druckluftanschlüsse erforderlich sind, was einen Aufwand bedingt, der in vielen Fällen nicht verfügbar ist. Ausserdem erfordert die rein pneumatische Steuerung des Federspeicherbremszylinders eine genaue Abstimmung der jeweils zur Wirkung kommenden Kräfte, damit zum Bremsen mit dem Eilanlegehubkolben die Kolbenstange in Bremsrichtung rasch um den Anlegehub verschoben wird und sofort anschliessend die pneumatische Kupplung eingelegt wird, damit über den Bremskraftkolben auf die Kolbenstange die volle Bremskraft der Hauptdruckfeder wirksam werden kann. Ohne eine solche pneumatische Abstimmung der Kräfteverhältnisse im Bremszylinder ist aber nicht sichergestellt, ob der Bremskraftkolben nicht zu zeitig mit der Kolbenstange gekuppelt wird, bevor diese entgegen den Reibungskräften im Bremsgestänge um den Anlegehub verschoben worden ist, oder ob der Bremskraftkolben erst verspätet mit der Kupplungsstange gekuppelt wird, nachdem diese um den Anlegehub verschoben worden ist. Beides ist veständlicherweise unerwünscht, so dass der bekannte Federspeicherbremszylinder an die jeweiligen Fahrzeuge besonders angepasst sein muss.

Ein weiterer Nachteil besteht darin, dass die nach dem Aufschalten des Bremskraftkolbens auf die in Bremsrichtung um den Anlegehub verschobene Kolbenstange zur Wirkung kommende Bremskraft der Hauptdruckfeder im Masse der gedüsten Absenkung der Druckluft im Zylinderraum nur relativ langsam auf ihre volle Grösse gebracht wird.

Schliesslich ist bei dem bekannten Federspeicherbremszylinder nachteilig, dass dieser mit keiner Notlöseeinrichtung versehen ist und auch nicht ohne weiteres mit einer bekannten Notlöseeinrichtung versehen werden kann, wie sie z.B. in der DE-A Nr. 2608502 gezeigt ist.

Die US-PS Nr. 3255676 zeigt einen weiteren, mit einem Betriebsbremszylinder kombinierten Federspeicherbremszylinder.

Der mit der Hauptdruckfeder belastete Bremskraftkolben mit grossen Durchmesser und der mit einer Hilfsdruckfeder beaufschlagte Eilanlegehubkolben mit wesentlich kleinerem Durchmesser sind über einen gemeinsamen Zylinderraum an Druckluft angeschlossen. Damit beim Bremsen zunächst der Eilanlegehubkolben die Kolbenstange rasch um den Anlegehub in Bremsstellung verschiebt, ehe der Bremskraftkolben auf die Kolbenstange aufgekuppelt wird, müssen die Federkräfte der beiden Federn zueinander abgewogen sein. Dabei muss die Hilfsdruckfeder in der Lage sein, entgegen den Reibungskräften des Bremsgestänges die Kolbenstange um den relativ langen Anlegehub zu verschieben. Das bedingt aber eine relativ weiche, lange Feder, die eine relativ lange Baulänge des Federbremszylinders erfordert. Die Vorrichtung zum Aufkuppeln des Bremskraftkolbens auf die Kolbenstange besteht bei dem bekannten Federspeicherbremszylinder aus pneumatisch betätigten Klinken, die in eine Verzahnung am Eilanlegehubkolben eingreifen. Danach müssen die Druckverhältnisse im Zylinderraum derart genau abgestimmt sein, dass die Klinken erst dann bei einer bestimmten Druckabsenkung in die Verzahnung am Schaft des Eilanlegehubkolbens eingreifen, wenn die Kolbenstange von der Hilfsbremsfeder in Bremsrichtung um den Anlegehub verschoben worden ist. Das ist aber nur möglich, wenn der Federspeicherbremszylinder an das jeweilige Fahrzeug besonders angepasst ist. Ist der Bremskraftkolben auf die Kolbenstange aufeukuppelt, so baut sich die Kraft, mit der die Hauptbremsfeder auf die Kolbenstange wirkt, im Masse der Druckabsenkung nur relativ langsam zu ihrer vollen Grösse auf.

Der bekannte Federspeicherbremszylinder ist zwar schon mit einer Notlöseeinrichtung versehen, jedoch ist hier für den Bremskraftkolben keine Dämpfung vorgesehen, und die Dämpfung für den

2

Eilanlegehubkolben durch die relativ weiche Feder ist bei den hohen Kräften, die beim Notlösen durch das sich schlagartig entspannende Bremsgestänge frei werden, nicht befriedigend.

Aufgabe der Erfindung ist es daher, einen Federspeicherbremszylinder der eingangs genannten Art mit kurzer Einbaulänge, reduziertem Gewicht und kurzer Anliegezeit anzugeben, der die Anpassungsschwierigkeiten der bekannten Federspeicherbremszylinder vermeidet, bei dem die Bremskraft der Hauptdruckfeder schon beim oder unmittelbar nach dem Aufkuppeln des Bremskraftkolbens auf die Kolbenstange schlagartig mit einem hohen Anteil zur Wirkung kommt und bei dem eine Notlöseeinrichtung vorgesehen werden kann, die nicht nur eine befriedigende Dämpfung des Bremskraftkolbens, sondern auch eine ausreichende Dämpfung des Eilanlegehubkolbens erlaubt.

Die Aufgabe wird erfindungsgemäss mit dem kennzeichnenden Merkmal des Anspruches 1 gelöst. Vorteilhafte Ausführungen und Weiterbildungen der Erfindung zeigen die Merkmale der Unteransprüche für sich oder in Kombination mit dem Hauptanspruch.

Aufgrund der wegabhängigen Steuerung des Federspeicherbremszylinders kann der Eilanlegehub unabhängig von der Art der jeweiligen Fahrzeugbremse, bei der der Federspeicherbremszylinder zur Anwendung kommt, vollstandig und rasch durchgeführt werden, wobei unmittelbar anschliessend ohne Zeitverzögerung durch Aufkuppeln des Bremskraftkolbens der Krafthub mit einem erheblichen Anteil der Federkraft der Hauptdruckfeder sprunghaft einsetzt. Bei einer Notlösung wird der Eilanlegehubkolben beim Zurückfedern der Kolbenstange wirksam gedämpft, in dem das vom Kolben verdrängte Luftvolumen den Zylinderraum nur gedüst verlassen kann.

Die Erfindung wird anhand von zwei Ausführungsbeispielen wie im einzelnen beschrieben und erläutert. In der zugehörigen schematischen Zeichnung zeigt:

Fig. 1 einen teilweise senkrechten Schnitt in Achsrichtung durch eine erste Ausführung, und

Fig. 2 einen entsprechenden Schnitt durch eine ähnliche Ausführung.

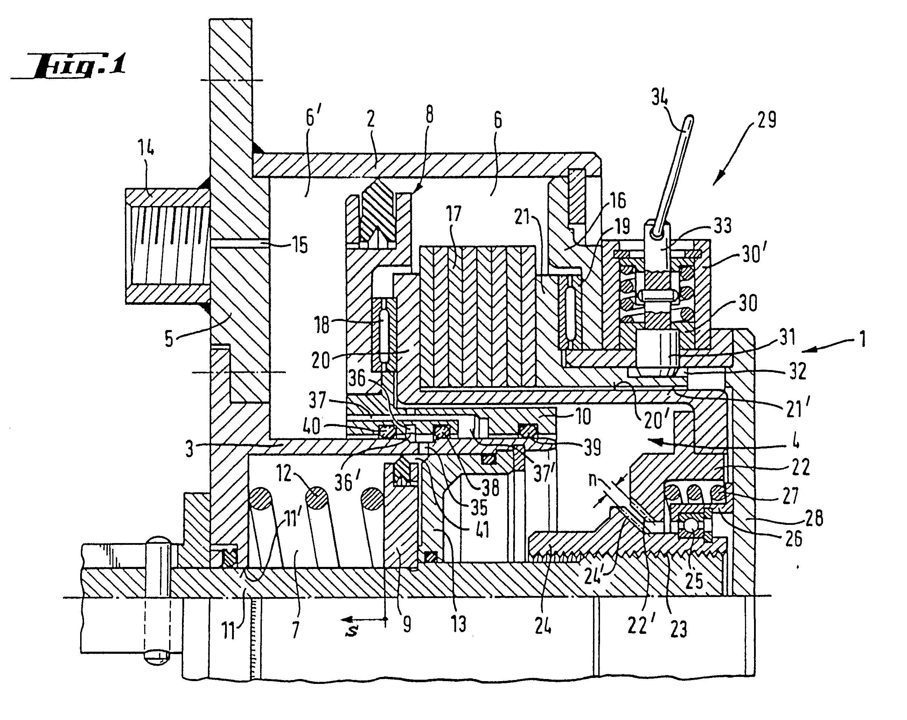

Fig. 1 zeigt einen teilweisen Achsschnitt durch einen erfindungsgemässen Federspeicherbremszylinder 1 mit einem Zylindergehäuse 2, das eine zylindrische Gehäuseinnenwand 3 aufweist, die sich in Achsrichtung über einen wesentlichen Abschnitt des Zylinderraumes 4 erstreckt und von der vorderen bremsseitigen Stirnwand des Gehäuses 2 ausgeht. Die Zylinderwand 3 unterteilt den Zylinderraum 4 in einen radial äusseren Zylinderteilraum 6 und einen radial inneren Zylinderteilraum 7. In dem äusseren Zylinderteilraum 6 ist ein Bremskraftkolben 8 und in dem inneren Zylinderteilraum 7 ist ein Eilanlegehubkolben 9 verschiebbar.

Der Bremskraftkolben 8 ist mit einem Gleitführungsringabschnitt 10 versehen, der zur Führung des Bremskraftkolbens 8 entlang der äusseren Fläche der Gehäuseinnenwand 3 verschiebbar ist.

Der Eilanlegehubkolben 9 ist an einer Kolbenstange 11 fest, die durch eine zentrale Öffnung 11' in der bremsseitigen Stirnwand 5 geführt ist und mit dem Bremsgestänge in Verbindung steht. Um die gelöste Bremse anzulegen, muss die Kolbenstange um einen Weg s vorgeschoben werden. Der Eilanlegehubkolben 9 ist in dem inneren Zylinderteilraum 7 verschiebbar. Zwischen der Stirnwand 5 und der zugewandten Seite des Eilanlegehubkolbens 9 ist eine Feder 12 angeordnet. Der Zylinderteilraum 7 ist an der von der Bremse abgewandten Stirnseite des Eilanlegehubkolbens von einem Wandteil 13 dicht abgeschlossen, das einerseits dicht und fest an der zylindrischen Innenwand 3 anliegt und andererseits an die Kolbenstange dicht anschliesst, die gegenüber dem Wandteil 13 axial verschieblich ist.

An der vorderen Gehäusestirnwand 5 befindet sich ein Druckmittelanschluss 14 mit einer düseartigen Öffnung 15 in der Stirnwand 5, so dass der Zylinderraum 6' zwischen der Stirnwand 5 und dem Bremskraftkolben 8 über die Öffnung 15 mit Druckluft beaufschlagbar und in umgekehrter Richtung entlüftbar ist. Zwischen dem Bremskraftkolben 8 und einer rückseitigen Stirnwand 16 des Zylindergehäuses 1 ist eine Hauptdruckfeder 17 angeordnet, die sich über Lager 18 und 19 am Bremskraftkolben und an der Stirnwand 16 abstützen. Hierzu ist die Feder zwischen zwei Gehäuseteilen 20 und 21 gehalten, die mit axialen Führungsflächen 20' und 21' zueinander verschiebbar sind. An dem radial inneren Gehäuseteil 20 greift ein Kupplungsteil 22 an. Das hintere Ende der Kolbenstange 11 ist als Spindel 23 mit nicht selbsthemmendem Gewinde ausgebildet. In das Gewinde greift eine Mutter 24 ein, die sich an einem radialen Kugellager 25 abstützt. An dem Kugellagergehäuse ist eine Hülse 26 gehalten. Zwischen der Hülse 26 und dem Kupplungsteil 22 ist eine Feder 27 angeordnet, die das Kupplungsteil 22 zum Kuppeln mit der Mutter 24 in Kupplungsrichtung beaufschlagt. Hierzu besitzt die Mutter 24 und das Kupplungsteil 22 gezahnte Schrägflächen 22', 24', die in der Kupplungsstellung ineinandergreifen. Befindet sich der Bremskraftkolben 8 in seiner Lösestellung, wie sie in Fig. 1 dargestellt ist, dann drückt der Bremskraftkolben 8 über das Federgehäuse 20, 21 und das Kupplungsteil 22 die Hülse 26 an einen Anschlag 28 am Gehäuse 2. Befindet sich ausserdem die Kupplungsstange 11 in ihrer Lösestellung, in der der Eilanlegehubkolben 9 sich an dem Wandteil 13 abstützt, dann ist die Kupplung zwischen der Mutter 24 und dem Kupplungsteil 22 freigegeben.

Der Federspeicherbremszylinder ist mit einer Notlöseeinrichtung 29 versehen. Diese besteht im Prinzip aus wenigstens einem am Gehäuse 1 festen Zylinder 30' mit einem unter Federkraft stehenden Kolben 30, der mit einer Klinke 31 versehen ist, die unter der Federkraft in eine Verzahnung 32 am Umfang des radial äusseren Federgehäuseteiles 21 einrastet. An dem Kolben befindet sich ein Schaft 33 mit einem Zugbügel 34. Durch Ziehen an dem Zugbügel kann die Klinke 31 entgegen der Federkraft aus der Verzahnung vorausgezogen und damit die Verriegelung des Drehmomentes unterbrochen werden, dass sich bei angelegter Bremse über die Kolbenstange 11, die Spindel 23, die Mutter 24, das Kupplungsteil 22 und das Federgehäuse 20, 21 an der Klinke 31 abstützt.

In der zylindrischen Innenwand 3 befindet sich eine oder mehrere über ihren Umfang verteilte radiale Öffnungen 35. In dem Gleitführungsabschnitt 10 des Bremskraftkolbens 8 befindet sich ein radial verlaufender Kanal 36 und ein hiervon getrennter, axial verlaufender Kanal 37. Letzterer erstreckt sich zwischen der bremsseitigen Stirnfläche des Kolbens 8 und einer Öffnungsstelle 37' am Innenumfang des Gleitführungsabschnittes 10. Die Öffnungsstelle 37' liegt zwischen zwei Dichtungen 38 und 39 in Nuten am Innenumfang des Gleitführungsabschnittes 10. Die Öffnung 36' des radial verlaufenden Kanales 36 liegt zwischen der einen Dichtung 38 und einer weiteren Dichtung 40 in einer zusätzlichen Nut am Innenumfang des Gleitführungsabschnittes 10.

In der in Fig. 1 dargestellten Lösestellung ist der Raum zwischen dem Eilanlegehubkolben 9 und dem Wandteil 13 über die radiale Öffnung 35 bzw. die radialen Öffnungen 35 in der zylindrischen Innenwand 3 und die radiale Öffnung 36 in dem Gleitführungsabschnitt 10 entlüftet. Wird der Bremskraftkolben 8 in Bremsrichtung um einen Weg verschoben, bei dem die Dichtung 38 die Öffnung 35 bzw. die Öffnungen 35 überschleift, dann ist der Zylinderraum 6' über den Kanal 37 im Gleitführungsabschnitt 10 des Kolbens 8 und die Öffnung 35 bzw. die Öffnungen 35 an den Raum 41 angeschlossen. Hierdurch wird der Eilanlegehubkolben 9 mit Druckluft aus dem Zylinderraum 6' beaufschlagt, so dass er entgegen der Kraft der Feder 12 in Bremsrichtung verschoben wird, wobei die Kolbenstange 11 um den Bremsanlegehub S verschoben wird.

Der Federspeicherbremszylinder nach Fig. 1 arbeitet wie folgt.

Der Federspeicherbremszylinder 1 ist in Fig. 1 in seiner gelösten Stellung gezeichnet. Der Raum 6' steht unter Druckluft, wodurch der Bremskraftkolben entgegen der Hauptfeder 17 in der dargestellten Stellung gehalten wird, in der Hülse 26 entgegen der Kraft der Feder 27 vom Kolben über das Kupplungsteil 22 gegen die Innenseite der stirnseitigen Gehäusewand gedrückt wird, wodurch die Feder 27 abgefangen wird. In der Lösestellung des Bremskraftkolbens 8 ist der Raum 41 zwischen dem Eilanlegehubkolben 9 und dem Gehäusewandteil 13 über die Bohrung 35 und 36 entlüftet, so dass der Eilanlegehubkolben 9 an der Kolbenstange 11 unter Kraft der Feder 12 bis auf Anschlag an den Gehäusewandteil 13 in der Zeichnung nach rechts verschoben ist. Aufgrund der abgefangenen Feder 27 befindet sich die Mutter 24 auf dem mit einer Spindel 23 versehenen Abschnitt der Kolbenstange 11 gegenüber dem Kupplungsteil 21 im ungekuppelten Zustand.

Zum Anlegen der Bremse wird schon durch eine kleine Druckherabsetzung in dem Raum 6' der Bremskraftkolben 8 mit Hilfe der Hauptfeder 17 nach links bewegt, wobei die Dichtung 38 den Kanal 35 überschleift. Die bereits entsprechend entspannte Luft aus dem Raum 6' gelangt nunmehr über die Kanäle 37 und 35 in den Raum 41, wodurch der Eilanlegehubkolben 9 zusammen mit der Kolbenstange 11 rasch um den Anlegehub S in der Zeichnung nach links verschoben wird. Hierbei wird die gegen den Eilanlegehubkolben wirkende Feder 12 gespannt. Hierdurch wird die Spindel 23 auf der Kolbenstange 11 axial nach links verschoben. Dabei ist die Spindel gegen Rotation verriegelt, aber axial verschiebbar im Zylinder oder bis zu einem mit dem Zylinder fest verbundenen Anschlag angeordnet. Die Spindel an der Kolbenstange 11 und die Mutter 24 haben ein nicht selbsthemmendes Gewinde, wie bereits eingangs gesagt. Wenn sich die Spindel mit der Kolbenstange axial bewegt, rotiert die Mutter 24, so dass man garantiert ein Kupplungsspiel n zwischen der Mutter 24 und dem Kupplungsteil 22 erhält. Nachdem sich die Spindel 23 um die Strecke s verschoben hat, wird die axiale Bewegung der Spindel 23 sowie auch die Rotation der Mutter 24 gestoppt. Durch den Anschluss des Raumes 6' an den Raum 41 erfolgt im Raum 6' eine weitere Druckabsenkung, die dazu führt, dass der Hauptkolben von der Hauptfeder 17 so weit nach links (Fig. 1) verschoben wird, bis der Kupplungsteil 22 mit der Mutter 24 in Eingriff kommt und die Mutter 24 gegen Rotation verriegelt. Die Kraft der Bremskraftfeder wirkt nun über das Kupplungsteil 22 und die Mutter 24 auf die Spindel 23, die nach Entlüftung des Raumes 6' die gesamte Federkraft der Bremskraftfeder 17 auf die Kolbenstange überträgt.

Zum normalen Lösen mittels Druckluft wird der Druck in dem Raum 6' erhöht. Dabei erfolgt auch eine Druckerhöhung über die Kanäle 37 und 38 in dem Raum 41. Wenn der Druck die Kraft der Hauptfeder 17 überwindet, bewegt sich der Bremskraftkolben 8 zurück nach rechts in seiner in Fig. 1 dargestellte Lösestellung. Hat die Dichtung 38 den Kanal 35 überschritten, dann wird die Luftzufuhr von dem Raum 6' zum Raum 41 unterbrochen. Der Raum 41 ist nun über die Kanäle 35 und 36 an Atmosphäre angeschlossen, so dass der Raum 41 nach Massgabe des Querschnittes des Kanals 36 gedämpft entlüftet wird.

Wenn der Bremskraftkolben 8 die Hülse 26 über das Kupplungsteil 22 gegen den stirnseitigen Gehäuseanschlag verschoben hat, wird das Kupplungsteil 22 von der Mutter 24 entkuppelt, so dass nunmehr die Mutter 24 frei rotieren kann und daher die Hilfsfeder 12 den Eilanlegehubkolben 9 bis gegen den Anschlag an der Gehäusewand 13 nach rechts verschieben kann. Damit befindet sich der Federspeicherbremszylinder 12 wieder in der in Fig. 1 dargestellten gelösten Stellung.

Wird eine Notlösung vorgenommen, so wird an dem Hebel 34 entgegen der Kraft der Feder gezogen, die die Klinke 30 in der Verzahnung 32 am Umfang der Federhalterungsteile 21 hält. Durch Ausrasten der Klinke 30 aus der Verzahnung 32 wird das Drehmoment frei, dass über die in der Bremsstellung befindlichen Kolbenstange 11, die Mutter 24, das Kupplungsteil 22, die Federhalterungsteile 20, 21 gegen die Klinke wirkt. Solange die Klinke durch Ziehen an dem Hebel aus ihrer Rastierung freigehalten wird, rotiert die Bremskraftfeder 17 zwischen den Lagern 18 und 19, wodurch sich die hohen Kräfte in der Kolbenstange 11 entspannen können. Hierbei weicht die Kolbenstange 11 nach rechts aus, wodurch der Eilanlegehubkolben 9 die unter Atmosphärendruck stehende Luft in dem Raum 41 über die Kanäle 35 und 37 verdrängt. Hierdurch wird nach Massgabe des Querschnittes des Kanals 35 bzw. der Kanäle 35 in der Gehäusewand 3 vorteilhafterweise eine gedämpfte Rückstellung der Kolbenstange erreicht.

Es ist klar, dass der bzw. die Kanäle 35 in der Gehäusewand 3 beim Anlegen der Bremse einen möglichst grossen Querschnitt aufweisen müssen, damit der Raum 41 rasch mit Druckluft aus dem Raum 6' beaufschlagt wird und damit der Eilanlegehubkolben 9 rasch in Bremsrichtung um den Anlegehub S verschoben werden kann. Andererseits muss der Kanal 35 bzw. die Kanäle 35 einen relativ engen Querschnitt aufweisen, damit eine möglichst grosse Dämpfung der Kolbenstange 11 beim Notlösen erzielt wird. Es ist klar, dass der Konstrukteur des Federspeicherbremszylinders hier einen Kompromiss eingehen muss, wenn er nicht in den Kanal 35 ein an sich bekanntes Drosselrückschlagventil einsetzen kann, das in der einen Richtung einen weitgehend ungehinderten Luftdurchgang zulässt und in der entgegengesetzten Richtung über eine Drosselstelle Luft nur gedrosselt entweichen lässt.

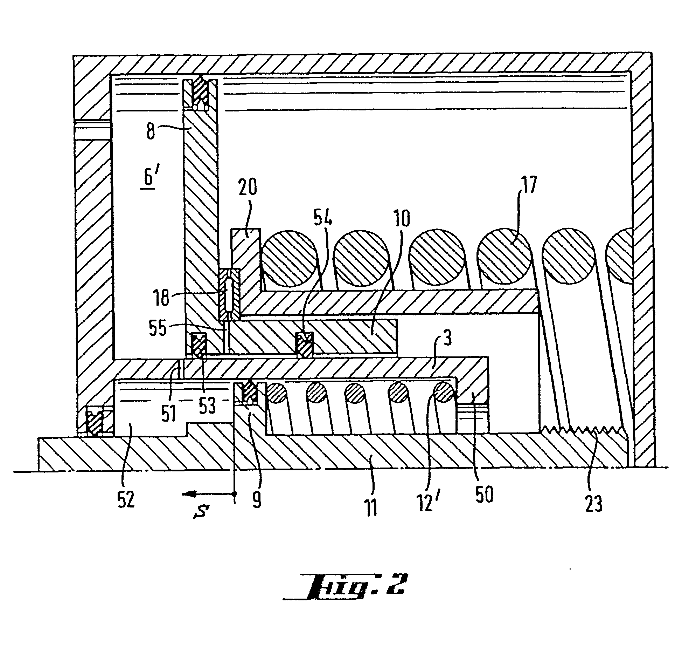

Fig. 2 zeigt in grob-schematischer Darstellung einen weiteren Federspeicherbremszylinder nach der Erfindung. Gleiche oder Funktionsgleiche Teile in den Fig. 1 und 2 sind mit den gleichen Bezugszeichen versehen. Dabei sind in Fig. 2 solche Teile der Einfachheit halber weggelassen, die zum Verständnis der Unterschiede des Federspeicherbremszylinders nach Fig. 2 gegenüber dem Federspeicherbremszylinder nach Fig. 1 nicht erforderlich sind, und die mit Teilen in Fig. 1 gleich bzw. gleichartig sind.

Die Hilfsfeder 12' in Fig. 2 ist hier zwischen einem Gehäuseanschlag 50 am inneren Gehäuseringabschnitt 3 und dem Eilanlegehubkolben 9 eingespannt. Sie wirkt also in entgegengesetzter Richtung wie die Feder 12 in Fig. 1. In dem Gehäuseringabschnitt 3 befindet sich ein Kanal 51, über den die Räume 6' in der Lösestellung miteinander verbunden sind. Der Raum 52 entspricht dem Raum 7 für die Feder 12 in Fig. 1. In dem Gleitführungsringabschnitt 10 am Bremskraftkolben 8 befindet sich zwischen Kolbenringdichtungen 53 und 54 ein Entlüftungskanal 55. Die Ausführungsvariante nach Fig. 2 arbeitet wie folgt:

In der Lösestellung der Bremse nehmen die Kolben 8 und 9 des Federspeicherbremszylinders die in Fig. 2 dargestellte Stellung ein. Hierbei sind die beiden Räume 6' und 52 über den Kanal 51 in der Gehäusewand 3 miteinander verbunden. Wird der Druck in dem Raum 6' zum Anlegen der Bremse abgesenkt, so verschiebt sich der Bremskraftkolben 8 zunächst um eine kleine Wegstrecke in Bremsrichtung nach links, bis die Dichtung 53 am Bremskraftkolben den Kanal 51 überfahren hat. Hierdurch wird der Raum 52 von dem Raum 6' abgesperrt und über die Kanäle 51 und 55 rasch entlüftet. Durch die Kraft der Feder 12' kann daraufhin der Eilanlegehubkolben 9 mit der Kolbenstange 11 um den Anlegehub S, wie er in Fig. 1 angegeben ist, rasch nach links verschoben werden, so dass bei weiter absinkendem Druck in dem Raum 6' der Bremskraftkolben unter der Kraft der Feder 17 nur noch den Krafthub ausführen muss, durch den die volle Bremskraft wirksam wird. Hierdurch wird der Bremskraftkolben entsprechend der Ausführung in Fig. 1 der Kolbenstange 11 aufgekuppelt, die bereits vorher durch den Eilanlegehubkolben um den freien Anlegehub verschoben worden ist.

Zum Lösen der Bremse wird der Raum 6' mit Druckluft beaufschlagt. Der Bremskraftkolben wird bei einem bestimmten Druckniveau entgegen der Kraft der Hauptfeder 17 in seine in Fig. 2 gezeigte Ausgangsstellung zurückgeführt. Hierbei überschleift die Dichtung 53 am Bremskraftkolben gegen Ende seines Rückstellungshubes den Kanal 51, wodurch nun auch der Raum 52 mit Druckluft beaufschlagt wird. Hierdurch wird auch der Eilanlegehubkolben 9 mit der Kolbenstange 11 entgegen der Kraft der Feder 12 in seine Ausgangslage nach rechts zurückgeführt.

Bei einer Notlösung übernimmt die Feder 12' in dem Ausführungsbeispiel nach Fig. 2 auch die Dämpfung der freiwerdenden Rückstellkräfte der Kolbenstange 11.

Es ist klar, dass die Erfindung nicht auf die dargestellten Ausführungsbeispiele beschränkt ist. So ist es für den Konstrukteur selbstverständlich, den erfindungsgemässen Federspeicherbremszylinder entsprechend derart auszubilden, dass die Kolbenstange zum Bremsen nicht gegen das Bremsgestänge drückt, sondern umgekehrt an diesem zieht. Weiterhin ist es klar, dass die Blattfeder 17 in Fig. 1 auch durch eine Schraubenfeder ersetzt sein kann, wie sie in Fig. 2 dargestellt ist. Schliesslich ist klar, dass die erfindungsgemässe Lösung nicht auf die Notlöseeinrichtung beschränkt ist, wie sie in Fig. 1 dargestellt ist. Statt dieser Notlöseeinrichtung können auch andere bekannte Notlöseeinrichtungen in Kombination mit den übrigen Merkmalen des erfindungsgemässen Federspeicherbremszylinders verwendet werden. Schliesslich ist die erfindungsgemässe Lösung auch nicht auf die Kupplungseinrichtung zum Aufkuppeln des Bremskraftkolbens 8 auf die vorher um den Anlegehub S verschobene Kolbenstange 11 beschränkt, die in Fig. 1 aus der Spindel 23 mit der Mutter 24 und dem Kupplungsteil 22 in Verbindung mit dem Bremskraftkolben 8 besteht. Auch hier bieten sich dem Fachmann Lösungsmöglichkeiten ohne weiteres an, um die in Fig. 1 gezeigte Kupplungseinrichtung durch andere bekannte Kupplungseinrichtungen zu ersetzen.

## Patentansprüche

1. Federspeicherbremszylinder, insbesondere für Schienenfahrzeuge, mit einer mit dem Bremsgestänge verbundenen Kolbenstange (11), einem mit der Kolbenstange (11) verbundenem Eilanlegehubkolben (9) zum raschen Verschieben der Kolbenstange um den Bremsanlegehub, einem von einer Hauptfeder (17) zur Ausübung der Bremskraft belasteten Bremskraftkolben (8), der zum Lösen der Bremse entgegen der Hauptfeder (17) mit Druckluft beaufschlagt ist, einer mechanischen Kupplungsvorrichtung (22, 24) zum Aufkuppeln des Bremskraftkolbens auf die von dem Eilanlegehubkolben (9) um den Anlegehub verschobene Kolbenstange (11) und einer pneumatischen Vorrichtung zur Steuerung des Eilanlegehubkolbens, dadurch gekennzeichnet, dass der Bremskraftkolben (8) stellungsabhängig die Druckluft-Zu- und -Abteilung (35, 36; 51, 55) zur pneumatischen Druckbeaufschlagung und Druckentlastung des Eilanlegehubkolbens (9) steuert.

2. Federspeicherbremszylinder nach Anspruch 1, dadurch gekennzeichnet, dass der Zylinderinnenraum (4) durch eine zylindrische Gehäuseinnenwand (3) in zwei Teilräume (6, 7) jeweils zur einseitigen Druckbeaufschlagung des Bremskraft- und des Eilanlegehubkolbens (8, 9) unterteilt ist, wobei in der Gehäuseinenwand (3) wenigstens eine durchgehende Öffnung (35; 51) vorhanden ist, über die der Teilraum (41; 52) für den Eilanlegehubkolben (9) mit dem Teilraum (6') für den Bremskraftkolben (8) in Abhängigkeit von der Stellung des Bremskraftkolbens verbindbar ist, und dass der Teilraum (6') für den Bremskraftkolben wenigstens beim Bremsen über eine Düse (15) entlüftet ist.

3. Federspeicherbremszylinder nach Anspruch 2, dadurch gekennzeichnet, dass der Bremskraftkolben mit einem inneren Gleitführungsringabschnitt (10) versehen ist, der entlang der zylindrischen Gehäuseinnenwand (3) verschieblich ist und nach Art einer Schieberventilsteuerung wenigstens einen den Gleitführungsringabschnitt (10) durchdringenden Entlüftungskanal (36; 55) zwischen zwei umlaufenden Kolbendichtungsringen (38, 39; 53, 54) aufweist, die dichtend an der Gehäuseinnenwand (3) anliegen, wobei der Teilraum (41; 52) zur Druckbeaufschlagung des Eilanlegehubkolbens (9) in Abhängigkeit von der Stellung des Bremskraftkolbens (8) über die Öffnung bzw. Öffnungen (35; 51) in der Gehäuseinnenwand (3) entweder mit dem Teilraum (6') zur Beaufschlagung des Bremskraftkolbens (8) oder über die zusätzliche Öffnung (36; 55) in dem Gleitführungsringabschnitt (10) am Bremskraftkolben (8) mit der Atmosphäre verbunden ist.

4. Federspeicherbremszylinder nach Anspruch 3, dadurch gekennzeichnet, dass der Gleitführungsringabschnitt (10) am Bremskraftkolben (8) zusätzlich zu dem Entlüftungskanal (36) wenigstens einen von diesem getrennten Belüftungskanal (37) aufweist, der am Aussenumfang des Gleitführungsringabschnittes getrennt von dem Eintritt des Entlüftungskanals zwischen zwei umlaufenden Kolbendichtungsringen (38, 39) austritt, die an der Gehäuseinnenwand (3) dichtend anliegen, wobei in einer ersten Stellung des Bremskraftkolbens (8) der Teilraum (41) zur Druckbeaufschlagung des Eilanlegehubkolbens (9) über den Belüftungskanal (37) im Gleitführungsringabschnitt des Bremskraftkolbens und die Öffnung (35) in der zylindrischen Gehäuseinnenwand mit dem Teilraum (6') zur Druckbeaufschlagung des Bremskraftkolbens verbunden ist, und dass in einer zweiten Stellung des Bremskraftkolbens (8) der Teilraum (41) zur Druckbeaufschlagung des Eilanlegehubkolbens (9) über die Öffnung (3) in der Gehäuseinnenwand und dem Entlüftungskanal (36) im Gleitführungsringabschnitt mit der Atmosphäre in Verbindung steht.

5. Federspeicherbremszylinder nach einem der Ansprüche 1 bis 4, dadurch gekennzeichnet, dass der Eilanlegehubkolben (9) in Löse- oder Bremsbetätigungsrichtung der Kolbenstange (11) von einer Feder (12) beaufschlagt ist.

6. Federspeicherbremszylinder nach Anspruch 5, dadurch gekennzeichnet, dass der Eilanlegehubkolben (9) in Löserichtung der Kolbenstange (11) von einer Feder (12) beaufschlagt ist und dass der Druckbeaufschlagungsraum (41) des Eilanlegehubkolbens (9) zwischen der Kolbenstange und der zylindrischen Gehäuseinnenwand von einem Anschlag (13) für den Kolben (9) begrenzt ist, der an der Gehäuseinnenwand (3) fest ist und an die Kolbenstange dicht anschliesst.

7. Federspeicherbremszylinder nach einem der Ansprüche 1 bis 6, dadurch gekennzeichnet, dass der Bremskraftkolben (8) über einen nicht selbsthemmenden Gewindespindeltrieb (23) mit der Kolbenstange kuppelbar ist.

8. Federspeicherbremszylinder nach Anspruch 7, dadurch gekennzeichnet, dass die gegen Rotation verriegelte, axial verschiebliche Kolbenstange (11) fest mit einer Spindel mit einem nicht selbsthemmenden Gewinde versehen ist, in das eine Mutter (24) eingreift, die gegen ein radiales Lager (25) abgestützt ist und die mit einem Kupplungsteil (22) am Bremskraftkolben über eine Feder (27) kuppelbar ist.

9. Federspeicherbremszylinder nach Anspruch 8, dadurch gekennzeichnet, dass an der Mutter (24) eine Hülse (26) gehalten ist, zwischen der und dem Kupplungsteil (22) eine Druckfeder (27) angeordnet ist, die das Kupplungsteil (22) in Kupplungrsrichtung zum Kuppeln mit der Mutter (24) belastet.

10. Federspeicherbremszylinder nach Anpruch 9, dadurch gekennzeichnet, dass die Hülse (26) in der Lösestellung des Bremskraftkolbens (8) entgegen der Kraft der Feder von dem Kupplungsteil (22) gegen einen Gehäuseanschlag (28) gehalten ist, wobei die Mutter (24) gegenüber dem Kupplungsteil (22) ein Kupplungsspiel (n) aufweist und bei einer axialen Bewegung der Spindel zur Überwindung des Anlegehubes (S) frei rotiert.

11. Federspeicherbremszylinder nach einem der Ansprüche 1 bis 10, mit einer in den Kraftübertragungsweg zwischen der Hauptfeder (17) und der Kolbenstange (11) angeordneten, mechanisch lösbaren Verriegelung (29), dadurch gekennzeichnet, dass die Öffnung in der Gehäuseinnenwand (3) einen solchen Querschnitt aufweist, dass einerseits über diese Öffnung eine ausreichend rasche Belüftung des Teilraumes (41) zum Verschieben des Eilanlegehubkolbens (9) um den Anlegehub (S) möglich ist, aber andererseits beim Notlösen der Bremse durch Lösen der mechanischen Verriegelung (29) der mit der Kolbenstange (11) zurücklaufende Eilanlegehubkolben (9) das Luftvolumen in dem Teilraum (41) über die Öffnung (35) mit ausreichender Dämpfung verdrängt.

12. Federspeicherbremszylinder nach Anspruch 11, dadurch gekennzeichnet, dass in die Öffnung (35) in der Gehäuseinnenwand (3) ein Drosselrückschlagventil eingesetzt ist, das in Richtung einer Druckbeaufschlagung des Eilanlegehubes (41) einen im wesentlichen ungedrosselten Strömungsweg freigibt und das in Richtung einer Verdrängung des Luftvolumens aus dem Teilraum (41) durch den sich in die Lösestellung bewegenden Eilanlegehubkolben (9) nur einen gedrosselten Entlüftungsweg freigibt.

13. Federspeicherbremszylinder nach den Ansprüchen 11 und 12, dadurch gekennzeichnet, dass die Hauptfeder (17) über Lager (18, 19) am Bremskraftkolben (8) und einer gegenüberliegenden Gehäusewand (16) drehbar abgestützt ist, wobei zur Notlösung bei einem gebremsten Fahrzeug durch Lösung der Verriegelung (29) die Spindel (23) ein Drehmoment auf die Mutter (24) abgibt, die über das Kupplungsteil (22) die Hauptfeder (17) in Umdrehung versetzt.

## Claims

1. Spring brake cylinder, more particularly for railway vehicles, with a piston rod (11) connected with the brake rods, a quick-action application stroke piston (9), connected with the piston rod (11), for rapid displacement of the piston rod by the brake application stroke, a braking force piston (8) which is loaded by a main spring (17) in order to apply the braking force and to which compressed air is admitted in order to release the brake against the main spring (17), a mechanical coupling device (22, 24) for coupling the braking force piston onto the piston rod (11) which is displaced by the quick-action application stroke piston (9) by the application stroke, and a pneumatic device for controlling the quick-action application stroke piston, characterised in that the braking force piston (8) controls by position the compressed air inlet and outlet lines (35, 36; 51, 55) for the pneumatic pressure application and relief of the quick-action application stroke piston (9).

2. Spring brake cylinder according to claim 1, characterised in that the cylinder interior (4) is subdivided by a cylindrical inside wall (3) of the housing into two sub-chambers (6, 7) for applying pressure to the braking force and quick-action application stroke pistons (8, 9) on one side respectively; in the inside wall (3) of the housing there is at least one through port (35; 51) via which the sub-chamber (41; 52) for the quick-action application stroke piston (9) can be connected with the sub-chamber (6') for the braking force piston (8) as a function of the position of the braking force piston, and in that the sub-chamber (6') for the braking force piston is vented at least during braking by way of a nozzle (15).

3. Spring brake cylinder according to claim 2, characterised in that the braking force piston is provided with an inner sliding guide annular section (10) which is displaceable along the cylindrical inside wall (3) of the housing and which has in the nature of a sliding valve control at least one venting duct (36; 55) between two rotating piston sealing rings (38, 39; 53, 54) which lie sealingly against the inside wall (3) of the housing, which said venting duct (36; 55) penetrates the sliding guide annular section (10); the sub-chamber (41; 52) for applying pressure to the quick-action application stroke piston (9) is connected as a function of the position of the braking force piston (8) by way of the port or ports (35; 51) in the inside wall (3) of the housing either with the sub-chamber (6') for admission to the braking force piston (8) or by way of the auxiliary port (36; 55) in the sliding guide annular section (10) on the braking force piston (8) with the atmosphere.

4. Spring brake cylinder according to claim 3, characterised in that the sliding guide annular section (10) on the braking force piston (8) has in addition to the venting duct (36) at least one air inlet duct (37) which is separate from this and which issues at the outer circumference of the sliding guide annular section separately from the inlet of the venting duct between two rotating piston sealing rings (38, 39) which lie sealingly against the inside wall (3) of the housing; in a first position of the braking force piston (8) the sub-chamber (41) for applying pressure to the quick-action application stroke piston (9) is connected by way of the air inlet duct (37) in the sliding guide annular section of the braking force piston and the port (35) in the cylindrical inside wall of the housing with the sub-chamber (6') for applying pressure to the braking force piston, and in that in a second position of the braking force piston (8) the sub-chamber (41) for applying pressure to the quick-action application stroke piston (9) is connected by way of the port (3) in the inside wall of the housing and the venting duct (36) in the sliding guide annular section with the atmosphere.

5. Spring brake cylinder according to one of claims 1 to 4, characterised in that the quick-action application stroke piston (9) is acted upon in the release or brake-actuating position of the piston rod (11) by a spring (12).

6. Spring brake cylinder according to claim 5, characterised in that the quick-action application stroke piston (9) is acted upon in the release position of the piston rod (11) by a spring (12), and in that the chamber (41) for applying pressure to the quick-action application stroke piston (9) is limited between the piston rod and the cylindrical inside wall of the housing by a stop (13) for the piston (9), which is integral with the inside wall (3) of the housing and which fits tightly against the piston rod.

7. Spring brake cylinder according to one of claims 1 to 6, characterised in that the braking force piston (8) can be coupled with the piston rod by way of a non-selflocking screw spindle gear (23).

8. Spring brake cylinder according to claim 7, characterised in that the axial displaceable piston rod (11), which is locked against rotation, is provided fixedly with a spindle having a non-selflocking thread wherein there engages a nut (24) which is supported against a radial bearing (25) and which can be coupled with a coupling portion (22) on the braking force position by way of a spring (27).

9. Spring brake cylinder according to claim 8, characterised in that there is held on the nut (24) a sleeve (26), between which and the coupling portion (22) there is arranged a compression spring (27) which loads the coupling portion (22) in the coupling direction for coupling with the nut (24).

10. Spring brake cylinder according to claim 9, characterised in that in the release position of the braking pressure piston (8) the sleeve (26) is held against the force of the spring of the coupling portion (22) against a housing stop (28); the nut (24) has coupling play (n) relative to the coupling portion (22) and with an axial movement of the spindle rotates freely in order to surmont the application stroke (S).

11. Spring brake cylinder according to one of claims 1 to 10, with a mechanically releasable locking device (29) arranged in the force transmission path between the main spring (17) and the piston rod (11), characterised in that the port in the inside wall (3) of the housing has a cross-section which is such that on the one hand the sub-chamber (41) is able to receive a sufficiently rapid intake of air by way of this port in order to displace the quick-action stroke piston (9) by the application stroke (S) but, on the other hand, for emergency brake release, by releasing the mechanical locking device (29) the quick-action application stroke piston (9) which goes back with the piston rod (11) displaces the volume of air in the sub-chamber (41) by way of the port (35) with sufficient cushioning.

12. Spring brake cylinder according to claim 11, characterised in that there is inserted into port (35) in the inside wall (3) of the housing a one-way restrictor which makes available in the direction of pressure application of the quick-action application stroke (41) an essentially unrestricted flow path, and which makes available in the direction of displacement of the volume of air from the sub-chamber (41) through the quick-action application stroke piston (9) which moves into the release position only a restricted venting path.

13. Spring brake cylinder according to claims 11 and 12, characterised in that the main spring (17) pivots by way of bearings (18, 19) on the braking force piston (8) and an opposite housing wall (16); for emergency release in the case of a braked vehicle, by releasing the locking device (29) the spindle (23) transmits a torsional movement to the nut (24) which causes the main spring (17) to rotate by way of the coupling portion (22).

## Revendications

1. Cylindre de frein à ressort accumulateur, plus particulièrement pour des véhicules sur rails, comportant une tige de piston (11) qui est reliée à la timonerie de frein, un piston de course morte rapide (9) relié à la tige de piston (11), pour le déplacement rapide de la tige de piston de course morte du frein, un piston (8) exerçant la force de pression chargé par un ressort principal (17) pour exercer la force de freinage, piston qui est chargé avec de l'air comprimé, à l'encontre du ressort principal (17), pour le desserrage du frein, un dispositif d'accouplement mécanique (22, 24) pour accoupler le piston exerçant la force de freinage à la tige de piston (11) qui a été déplacée par le piston de course morte rapide (9) de la course morte et un dispositif pneumatique pour la commande du piston de course morte rapide, caractérisée par le fait que le piston (8) exerçant la force de freinage commande, en fonction de la position, l'admission et l'évacuation (35, 36; 51, 55) de l'air comprimé en vue de la charge en air comprimé du piston de course morte rapide (9).

2. Cylindre de frein à ressort accumulateur selon la revendication 1, caractérisé par le fait que la chambre intérieure du cylindre (4) est subdivisée par une paroi intérieure cylindrique du carter (3) en deux chambres partielles (6, 7), respectivement pour charger unilatéralement en pression le piston exerçant la force de freinage et le piston de course morte rapide (8, 9), la réalisation étant telle que dans la paroi intérieure du carter (3) est prévue au moins une ouverture traversante (35; 51) par l'intermédiaire de laquelle la chambre partielle (41; 52) pour le piston de course morte rapide (9) est susceptible d'être reliée à la chambre partielle (6') pour le piston exerçant la force de freinage (8), en fonction de la position du piston exerçant la force de freinage, et que la chambre partielle (6') pour le piston exerçant la force de freinage est mise à l'atmosphère, au moins au freinage, par l'intermédiaire d'une tuyère (15).

3. Cylindre de frein à ressort accumulateur selon la revendication 2, caractérisé par le fait que le piston qui développe la force de freinage est pourvu d'une section annulaire intérieure de guidage par glissement (10) qui est déplaçable le long de la paroi cylindrique (3) du boîtier et qui comporte, à la manière d'une commande de soupape à coulisse, entre deux bagues d'étanchéité de piston (38, 39; 53, 54) susceptibles de tourner, un canal de mise à l'atmosphère (36; 55) qui traverse la section annulaire de guidage par glissement (10), lesquelles bagues d'étanchéité s'appliquent, avec étanchéité, contre la paroi intérieure du carter (3), la réalisation étant telle que la chambre partielle (41; 52), pour charger en pression le piston de course morte rapide (9) en fonction de la position du piston (10) qui développe la force de freinage, est reliée par l'intermédiaire de l'ouverture ou d'ouvertures (35; 51) ménagées dans la paroi intérieure du carter soit avec la chambre partielle (6') pour charger le piston (8) qui développe la force de freinage, soit par l'intermédiaire de l'ouverture supplémentaire (36; 55) ménagée dans la section annulaire de guidage par glissement (10) du piston (8) développant la force de freinage, avec l'atmosphère.

4. Cylindre de frein à ressort accumulateur selon la revendication 3, caractérisé par le fait que la section annulaire de guidage par glissement (10) prévue au niveau du piston (8) développant la force de freinage comporte, en plus du canal de mise à l'atmosphère (36), au moins un canal d'alimentation (37) distinct du précédent et qui débouche à la périphérie extérieure de la section annulaire de guidage par glissement, séparément de l'entrée du canal de mise à l'atmosphère, entre deux bagues d'étanchéité (38, 39) du piston susceptible de tourner, lesquelles bagues s'appliquent, avec étanchéité, contre la paroi intérieure (3) du carter, la réalisation étant telle que, dans une première position du piston (8) qui développe la force de freinage, la chambre partielle (41) servant à la charge en pression du piston de course morte rapide (9) est, par l'intermédiaire du canal d'alimentation (37) prévu dans la section annulaire de guidage par glissement du piston développant la force de freinage et par l'intermédiaire de l'ouverture (35) ménagée dans la paroi intérieure cylindrique du boîtier, reliée à la chambre partielle (61) pour charger en pression le piston qui développe la force de freinage alors que, dans une seconde position du piston (8) qui développe la force de freinage, la chambre partielle (41) servant à la charge en pression du piston de course morte rapide (9) communique, par l'intermédiaire de l'ouverture (3) ménagée dans la paroi intérieure du carter et par l'intermédiaire du canal de mise à l'atmosphère (36) prévu dans la section annulaire de guidage par glissement, avec l'atmosphère.

5. Cylindre de frein à ressort accumulateur selon l'une des revendications 1 à 4, caractérisé par le fait que le piston de course morte rapide (9) est chargé par un ressort dans la direction du desserrage ou de la commande du frein de la tige de piston (11).

6. Cylindre de frein à ressort accumulateur selon la revendication 5, caractérisé par le fait que le piston de course morte rapide (9) est chargé, dans la direction de desserrage de la tige de piston (11), par un ressort (12), et que la chambre de charge en pression (41) du piston de course morte rapide (9) est limitée, entre la tige de piston et la paroi intérieure cylindrique du carter, par une butée (13) pour le piston (9) qui est fixée sur la paroi intérieure du carter (3) et qui porte, avec étanchéité, contre la tige de piston.

7. Cylindre de frein à ressort accumulateur selon l'une des revendications 1 à 6, caractérisé par le fait que le piston (8) qui développe la force de freinage est susceptible d'être accouplé, par l'intermédiaire d'une transmission à broche filetée (23) non autobloquante, à la tige de piston.

8. Cylindre de frein à ressort accumulateur selon la revendication 7, caractérisé par le fait que la tige de piston (11) qui est déplaçable axialement et qui est verrouillée contre une rotation est solidaire d'une broche pourvue d'un filetage non autobloquant qui est attaqué par un écrou (24) qui prend appui contre un palier radial (25) et qui est susceptible d'être accouplé, par l'intermédiaire d'un ressort (27), avec un élément d'accouplement (22) prévu sur le piston qui développe la force de freinage.

9. Cylindre de frein à ressort accumulateur selon la revendication 8, caractérisé par le fait que l'écrou (24) porte une douille (26) entre laquelle et entre l'élément d'accouplement (22) est disposé un ressort de pression (27) qui charge l'élément d'accouplement (22) dans la direction d'accouplement pour l'accouplement avec l'écrou (24).

10. Cylindre de frein à ressort accumulateur selon la revendication 9, caractérisé par le fait que la douille (26) est maintenue, dans la position de desserrage du piston (8) qui développe la force de freinage et à l'encontre de la force du ressort, par l'élément d'accouplement (22) contre une butée du carter (28), la réalisation étant telle que l'écrou (24) présente, par rapport à l'élément d'accouplement (22), un jeu d'accouplement et tourne librement, lors d'un déplacement axial de la broche filetée, pour surmonter la course d'application (S).

11. Cylindre de frein à ressort accumulateur selon l'une des revendications 1 à 10, du type comportant un verrouillage dégageable mécaniquement et disposé dans la voie de transmission des efforts entre le ressort principal (17) et la tige de piston (11), caractérisé par le fait que l'ouverture ménagée dans la paroi intérieure du carter (3) possède une section transversale qui est telle que, d'une part, et par l'intermédiaire de cette ouverture, une alimentation rapide et suffisante de la chambre partielle (41) est possible pour déplacer le piston (9) de course morte rapide en vue de la course d'application (S) alors que, d'autre part, lors d'un desserrage d'urgence du frein et par suppression du verrouillage mécanique (29), le piston (9) de course morte rapide qui se déplace en sens inverse, avec la tige de piston (11), refoule, avec un amortissement suffisant, le volume d'air de la chambre partielle (41) par l'intermédiaire de l'ouverture (35).

12. Cylindre de frein à ressort accumulateur selon la revendication 11, caractérisé par le fait que dans l'ouverture (35) ménagée dans la paroi intérieure du carter (3) est montée une soupape de retenue et d'étranglement qui dégage, en direction d'une charge en pression de la course morte rapide (41), une voie d'écoulement sensiblement non étranglée et qui, en direction d'un refoulement du volume d'air de la chambre partielle (41), dégage, par le piston (9) de course morte rapide qui se déplace dans la position de desserrage, seulement une voie de désaération étranglée.

13. Cylindre de frein à ressort accumulateur selon les revendications 11 et 12, caractérisé par le fait que le ressort principal (17) est soutenu, tout en pouvant tourner, par des paliers (18, 19) ménagés sur le piston (8) dégageant la force de freinage et par une paroi de carter (16) qui se situe en face, la réalisation étant telle que, pour le desserrage d'urgence et dans le cas d'un véhicule freiné, la broche (23), par la suppression du verrouillage (29), communique un couple de rotation à l'écrou (24), ledit écrou communique un mouvement de rotation au ressort principal (17) par l'intermédiaire de l'élément d'accouplement (22).

**Fig.1**

**Fig. 2**